# FASCICULE DE BREVET EUROPEEN

(11) **EP 0 972 562 B1**
(45) Date de publication et mention de la délivrance du brevet: **27.08.2003**
(21) Numéro de dépôt: 99401482.7
(22) Date de dépôt: 16.06.1999
(51) Int. Cl.: B01J 8/16, B01J 19/00

(54) **Dispositif d'élimination de dépôts carbonés sur des objets solides**
Vorrichtung zur Verhinderung von Kohlenstoffablagerungen auf festen Gegenständen
Apparatus to eliminate carbon deposits on solid objects

(30) Priorité: 13.07.1998 FR 9809020
(43) Date de publication de la demande: 19.01.2000
(73) Titulaire: Institut Francais du Petrole, 92852 Rueil-Malmaison Cedex (FR)
(72) Inventeur: Martin, Gérard, 69230 Saint Génis Laval (FR); Nougier, Luc, 69110 Foy les Lyons (FR)

(56) Documents cités:
- EP-A- 0 518 016
- US-A- 5 508 243

## Description

La présente invention concerne le domaine du traitement de solides et plus spécifiquement de l'élimination totale ou partielle de dépôts carbonés déposés sur des solides.

Une oxydation, une gazéification à l'air, à l'oxygène, à la vapeur d'eau ou encore au gaz carbonique sont envisagées pour éliminer les dépôts carbonés.

Les objets qui ne peuvent être traités en lit fluidisé sont particulièrement visés par l'invention, comme il sera justifié plus loin.

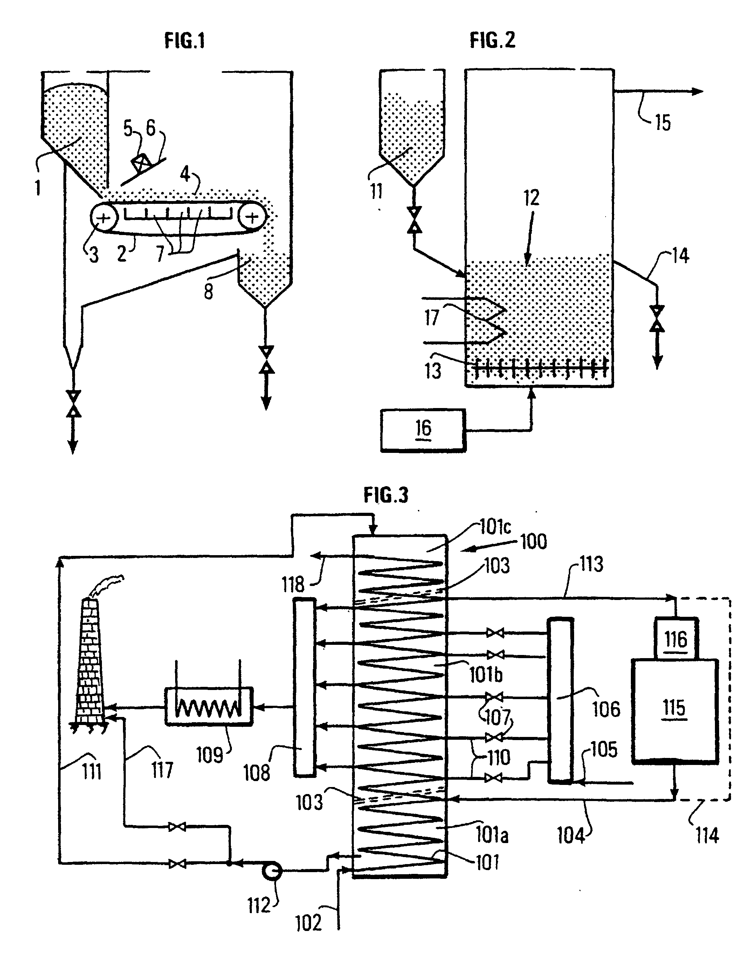

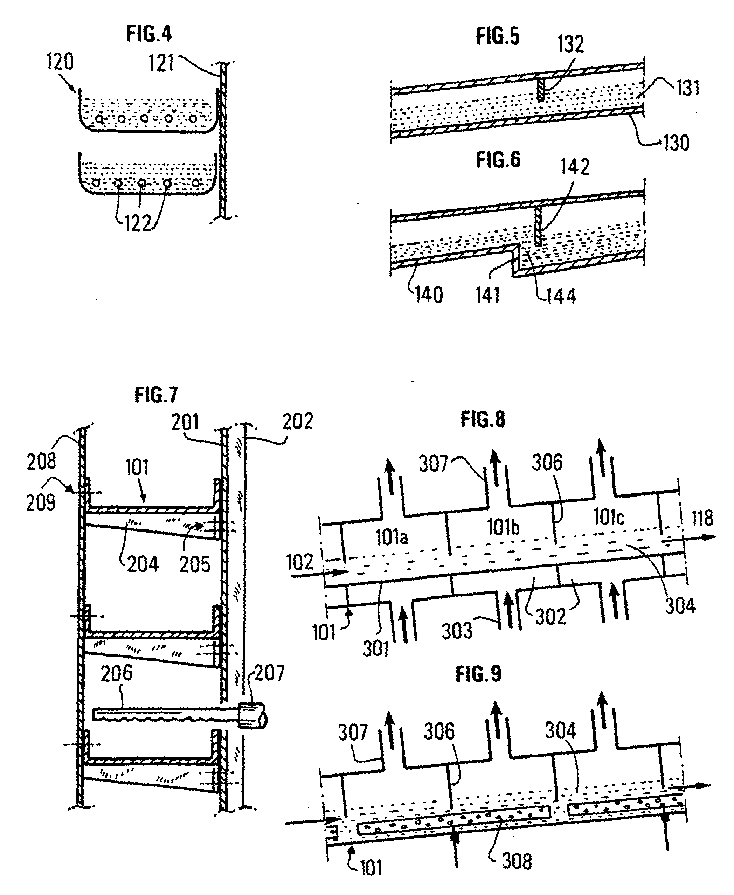

De façon connue, (cf. Perry's Chemical Engineer's Handbook, 6^{th} edition, 9-40 Energy utilization, conversion, and resource conservation Fig. 9-32 Basic types of mechanical stockers) l'élimination de dépôts carbonés sur des objets solides par oxydation et/ou gazéification peut être réalisée de façon similaire à une opération de combustion de charbon, sur une grille cheminante telle que représentée à la figure 1. La charge à traiter 1, stockée dans une enceinte est déposée gravitairement sur une grille cheminante 2 montée sur deux cylindres en rotation 3. La couche formée 4 a en général quelques centimètres d'épaisseur. Elle est chauffée par un moyen de chauffage 5 monté sur une voûte rayonnante 6, qui peut être un brûleur utilisant un combustible auxiliaire tel que du fuel ou du gaz naturel. L'air ou l'agent de gazéification est injecté sous la grille 2, passe au travers de la couche 4, grâce à un ou plusieurs caissons 7. Les débits de gaz dans chacun des caissons peuvent être réglés individuellement pour ajuster au mieux le profil thermique de la couche et optimiser la conversion de la charge. Les solides traités sont évacués par le dispositif 8, tandis que les effluents gazeux résultant du traitement sont extraits par une conduite spécifique et le plus souvent envoyés vers une chaudière ou un échangeur de chaleur pour récupération d'énergie.

Ce type de dispositif connu ne permet de traiter que des objets d'une certaine taille (grandeur caractéristique supérieure à 1 cm) à cause des problèmes de renardage au travers de la grille cheminante et d'envols de poussières.

Les températures de traitement sont difficiles à maîtriser à cause de la nature fixe de la couche constituée, couche à l'intérieur de laquelle les échanges thermiques sont faibles par définition.

Enfin, la grille cheminante 2 pose régulièrement des problèmes mécaniques, d'encrassement, de grippage, etc.

On peut s'affranchir de certains de ces inconvénients en faisant appel à des systèmes à lit fluidisé tel que représenté à la figure 2. Selon ce concept connu, la charge à traiter, stockée dans une enceinte 11, est introduite gravitairement dans le lit fluidisé 12. Le milieu fluidisé est obtenu grâce à une insufflation d'air ou d'agent de gazéification au travers d'un diffuseur 13 dans des conditions connues de l'Homme de l'Art. Les solides traités sont évacués, par exemple par débordement à l'aide d'une ligne 14, tandis que les effluents gazeux sortent du dispositif via une conduite 15 pour être dirigés par exemple vers un échangeur sur une chaudière de récupération.

Ce dispositif doit nécessairement être équipé d'un moyen de préchauffage 16, qui peut être par exemple une chambre de combustion d'un combustible auxiliaire placée sur le circuit d'air ou d'agent de gazéification.

Dans le cas où la chaleur produite dans le milieu fluidisé est importante, on peut procéder à une extraction de calories grâce à un échangeur immergé 17, afin de maintenir la température du milieu dans une plage donnée.

Ce type de dispositif (lit fluidisé) permet de traiter des objets de petite taille (de quelques dizaines de microns à quelques millimètres) dans des conditions de contrôle précis de la température. Toutefois, il présente plusieurs inconvénients; Tout d'abord, il se comporte comme un réacteur parfaitement agité, de sorte que certains des objets solides quittent très rapidement le système après leur introduction. Ils ne sont donc pas correctement traités.

Par ailleurs, le milieu fluidisé est très érosif à cause du frottement des objets les uns sur les autres, surtout au niveau des introductions d'air. L'emploi d'un tel système est donc à éviter si l'on traite des objets dont la résistance mécanique est limitée.

Il peut aussi résulter de ces problèmes d'attrition, la présence de quantités significatives de poussières dans les effluents gazeux, poussières qu'il faudra éliminer avant le rejet desdits effluents gazeux à l'atmosphère.

Par ailleurs, les pertes de charge sur le circuit gazeux sont plus importantes que dans le système à grille cheminante et peuvent être pénalisantes dans certains cas. Enfin, la technologie du lit fluidisé est généralement assez complexe du point de vue mécanique et donc onéreuse.

On connaît par ailleurs, la demande de brevet française FR 2 634 187 qui divulgue un système à lit vibrant ayant une auge fermée de section sensiblement concave.

En outre, on connaît par la demande française FR 2 702 392 déposée au nom du demandeur, un dispositif à élévateur vibrant pour la régénération d'absorbants employés en désulfuration de fumées. Cependant ce dispositif permet mal de traiter des produits "collants" de très fine granulométrie (< 20 microns). Ce document décrit différents moyens de chauffage et de refroidissement du dispositif, avec brûleur ou auge échangeuse selon le cas.

On connaît aussi la demande française EN. 97/02658 déposée au nom du demandeur et qui divulgue un réacteur élévateur vibrant constitué d'un tube hélicoïdal sensiblement cylindrique, destiné à la régénération de catalyseurs de reformage.

Aucun des dispositifs connus précités ne permet d'éliminer des dépôts carbonés sur des solides ayant des dimensions supérieures ou égales au cm.

Le dispositif selon l'invention vise à s'affranchir des inconvénients précités et à offrir des conditions isothermes pour le traitement des objets, sans les dégrader.

Par ailleurs, la présente invention représente une solution fiable, peu coûteuse en énergie, de mise en oeuvre simple.

Les autres avantages de l'invention sont notamment :
- un traitement de solides ayant des formes, tailles, caractéristiques variées;
- une grande flexibilité vis-à-vis de la teneur en carbone des solides traités;
- un faible coût opératoire;
- un investissement limité;
- une grande compacité;
- une grande flexibilité sur le débit traité qui peut varier d'un facteur 10;
- une limitation de l'usure mécanique des objets traités.

L'objet à traiter peut être soumis à des atmosphères gazeuses de compositions différentes.

Ainsi, l'invention a pour objet un dispositif d'élimination de dépôts carbonés sur des objets solides comprenant une entrée pour les objets à traiter, une zone de chauffage desdits objets ayant une alimentation et une sortie pour le gaz de chauffage, une zone de traitement desdits objets par oxydation et/ou gazéification ayant une alimentation et une sortie pour le fluide de gazéification, une sortie pour les objets traités.

Conformément à l'invention, lesdites zones de chauffage et de traitement sont situées dans une même enceinte et comprennent un élément vibrant à fond essentiellement plat destiné au transport des objets, ledit fond permettant le support des objets, la diffusion du fluide à travers lesdits objets et la transmission des vibrations ; le dispositif selon l'invention comprend en outre une zone de refroidissement desdits solides disposée dans ladite enceinte en aval de la zone de traitement relativement au sens de déplacement desdits solides dans l'enceinte, et un moyen de chauffage extérieur à l'enceinte étant par ailleurs prévu.

Selon un mode de réalisation de l'invention, le dispositif comprend en outre un conduit entre la sortie pour les gaz de chauffage et l'entrée pour les gaz de refroidissement, un compresseur et une vanne étant prévus sur ledit conduit.

Par ailleurs, le moyen de chauffage comprend un brûleur associé à une chambre de combustion, l'entrée du brûleur étant relié à une sortie de la zone de refroidissement et la sortie de la chambre de combustion à une entrée dans la zone de chauffage.

Selon une particularité de l'invention, le dispositif comprend en outre un conduit de dérivation du moyen de chauffage (115, 116), conduit dans lequel transitent les gaz lorsqu'ils n'ont pas besoin d'être réchauffés.

De façon spécifique, l'entrée pour le fluide de gazéification comprend un distributeur multipoints.

En outre, la sortie pour le fluide de gazéification comprend un collecteur multipoints.

Dans cette configuration, ledit collecteur comprend une sortie unique reliée par exemple à l'entrée d'un échangeur de chaleur ou d'une chaudière.

Selon une spécificité de l'invention, le dispositif comprend avantageusement des moyens d'isolement des atmosphères entre la zone de chauffage et la zone de traitement et entre la zone de traitement et la zone de refroidissement.

Par ailleurs, la zone de traitement peut comprendre plusieurs éléments de séparation.

Conformément à un mode de réalisation de l'invention, l'élément vibrant à fond essentiellement plat est une auge munie de rebords, de forme générale hélicoïdale, fixée sur son diamètre intérieur à un vibrateur tel qu'un fût cylindrique.

Selon un autre mode de réalisation de l'invention, l'auge à fond essentiellement plat est une plateforme commune aux zones de chauffage, de traitement et de refroidissement.

De façon particulière, les différentes alimentations gazeuses sont constituées de tubes perforés disposés sur le fond de l'auge

Selon l'autre mode de réalisation de l'invention, l'élément plat est constitué de caissons d'alimentation en gaz et la surface inférieure de l'auge peut alors être constituée d'un matériau poreux ou d'une tôle perforée.

D'autres caractéristiques, détails, avantages de l'invention apparaîtront mieux à la lecture de la description qui va suivre faite à titre illustratif et nullement limitatif en référence aux dessins annexés sur lesquels :
- La figure 3 est un schéma d'un mode de réalisation de l'invention;
- La figure 4 est un détail de l'auge selon le mode de réalisation de la figure 3;
- La figure 5 représente un mode de réalisation d'un moyen d'isolation selon l'invention;
- La figure 6 illustre un autre mode de réalisation d'un moyen d'isolation de l'invention;
- La figure 7 est une coupe longitudinale simplifiée du mode de réalisation de la figure 3;
- La figure 8 est une vue schématique d'une autre mode de réalisation de l'invention; et
- La figure 9 est une vue schématique d'une variante de la figure 8.

La figure 3 illustre schématiquement un mode de réalisation de l'invention. Ce dispositif comprend une auge vibrante 101 alimentée en charge à traiter par une ligne 102.

L'auge vibrante 101 est contenue dans une enceinte fermée 100 et divisée en trois zones dans lesquelles sont réalisées trois fonctions différentes, grâce à une circulation de fluides gazeux ; les trois zones sont pneumatiquement isolées les unes des autres par des moyens 103 qui permettent d'avoir des atmosphères différentes dans chacune des zones.

Les trois zones peuvent être globalement définies de la façon suivante :

La zone 101a, dite zone de chauffage, est parcourue en écoulement descendant, par un gaz chaud apporté par une ligne 104, et en écoulement ascendant par la charge à traiter.

La zone 101b, dite zone de réaction est alimentée en air, en oxygène ou encore en fluide de gazéification par une ligne 105. Cette alimentation peut se faire en un point unique ou en plusieurs points comme représenté sur la figure 3. A partir d'un distributeur 106, on alimente, via des lignes 110 équipées de systèmes de contrôle de débit 107, une spire, une demi-spire ou encore plusieurs spires de l'auge vibrée 101. Les produits gazeux issus du traitement sont envoyés dans un collecteur 108, puis ensuite dans une chaudière ou un échangeur de chaleur 109, pour qu'ils y cèdent leur énergie, et enfin ils sont rejetés à l'atmosphère après un éventuel traitement de fumées non représenté sur la figure.

Grâce à ce dispositif, on peut ainsi créer un courant croisé gaz-solide et ajuster ou optimiser la conversion ou le profil thermique, en adaptant chacun des débits de gaz élémentaires passant dans les lignes 110.

La zone 101c est la zone de refroidissement de la charge solide. Elle est alimentée en gaz de refroidissement par une ligne 111 et est parcourue par ce gaz selon un courant vertical descendant, alors que la charge solide y circule de façon ascendante.

Comme il est visible sur la figure 3, les circuits de chauffage et de refroidissement de la charge solide peuvent être couplés.

Dans ce cas, un gaz, qui peut être un fluide relativement neutre, tel que des fumées de combustion proches de la stoechiométrie ou de l'azote, est envoyé dans la zone de refroidissement 101c grâce à un compresseur 112 placé près de la sortie de la zone de chauffage 101a. En parcourant la zone de refroidissement 101c, le gaz s'échauffe progressivement et il en sort par une ligne 113. Il peut ensuite être envoyé directement dans la zone de chauffage de la charge solide via une dérivation 114 indiquée en pointillé sur la figure 3. Plus généralement, on préfère réchauffer le gaz en le faisant passer dans une chambre de combustion 115. Cette chambre 115 peut être équipée d'un brûleur 116 utilisant un combustible tel que du gaz naturel ou tout moyen équivalent.

Si le gaz de chauffage et de refroidissement de la charge solide est constitué de fumées, on peut envisager un contact direct entre ledit gaz et les fumées issues du brûleur 116. Dans le cas contraire, il faut qu'il ait deux circuits indépendants.

Le gaz chaud issu de la chambre de combustion 115 est dirigé vers la zone de chauffage de la charge solide via une ligne 104. A la sortie de la zone de chauffage 101a, les gaz peuvent être envoyés dans un échangeur et/ou un condenseur non représentés sur la figure, avant d'être repris par le compresseur 112. Si le dispositif fonctionne avec des fumées, il faut évidemment que la pression soit maintenue constante, ce qui peut être réalisé par une évacuation partielle des gaz via une ligne extérieure 117.

Les solides traités sortent de l'enceinte 100 par une ligne 118, pour être envoyés vers un stockage quelconque ou en traitement complémentaire non représenté sur la figure.

Le contrôle de la température ou du profil thermique dans la zone de réaction 101b peut se faire par ajustement des débits de gaz réactifs, mais cette solution présente l'inconvénient de lier le problème du contrôle de la température à celui de la conversion.

Une alternative préférée consiste à immerger dans tout ou partie de l'auge 101 de la zone réactionnelle 101b des tubes dans lesquels on fera circuler de préférence un fluide gazeux, afin de contrôler et de faire varier sur une assez large plage, l'extraction de chaleur.

La figure 4 est une illustration d'un dispositif possible, avec une auge 120 montée sur un support 121 et des tubes 122 noyés dans la couche de solides à traiter.

Dans une configuration particulière, il est aussi possible qu'une partie de l'énergie récupérée au niveau de l'échangeur 109 serve au préchauffage de l'air de combustion du brûleur 116, afin de minimiser la consommation de combustible : cette liaison n'est toutefois pas représentée sur la figure 3.

Les moyens d'isolement des atmosphères entre les zones 101a, 101b et 101c, peuvent être des dispositifs tels que représentés à la figure 5. Sur cette figure, on voit une auge 130 supporter un lit de charge solide 131. L'isolement des atmosphères se fait grâce à une plaque de barrage 132 qui occupe toute la section de passage du gaz et qui plonge légèrement dans le lit de solides. Eventuellement, la plaque 132 peut être montée en rotation libre sur l'auge supérieure.

La figure 6 est un autre moyen possible d'isolement. Dans ce mode de réalisation, on réalise dans l'auge 140 une discontinuité 141, qui, associée à une plaque fixe 142 disposée juste en aval, permet de constituer une accumulation de solides 144.

A noter que ces moyens d'isolement peuvent aussi équiper la zone de réaction 101b, si l'on veut améliorer la qualité du courant croisé air-solide.

La présente invention permet ainsi d'obtenir un lit de solides vibré qui permet de créer un milieu proche du milieu fluidisé. En conséquence les échanges de matière et de chaleur au sein de ce milieu sont intenses et facilitent donc le contact gaz-solides, ainsi que le contrôle précis de la température. Ceci représente donc un avantage décisif par rapport à tous les systèmes qui fonctionnent en lit fixe ou en lit mobile.

De plus, grâce à l'invention il est possible de créer des conditions d'écoulement piston quasi parfaites en ce qui concerne la phase solide. De ce fait pour un volume réactionnel donné, les taux de conversion seront supérieurs à ceux que l'on peut atteindre avec un mélangeur parfait tel que le lit fluidisé classique.

Par ailleurs, le dispositif selon l'invention génère peu d'attrition et l'on peut donc traiter des objets ayant une résistance mécanique limitée.

La gamme des objets traités est étendue puisque ceux-ci ont des dimensions caractéristiques qui peuvent aller de quelques dizaines de microns à plusieurs centimètres.

En outre, il est possible selon l'invention d'introduire et d'extraire différentes qualités de gaz en tout point de l'écoulement de solides.

La figure 7 illustre un exemple de construction possible du dispositif selon le mode de réalisation de l'invention schématisé sur la figure 3.

Ledit dispositif comprend un fût cylindrique sensiblement vertical 201, rigidifié, si nécessaire et de façon connue, par des armatures 202. Le fût central 201 est monté sur un socle ou suspendu, et isolé de l'environnement par des moyens du type silent blocs. Un ou plusieurs moteurs à balourd (non représentés) sont fixés au fût central. L'auge vibrante 101, qui comprend un fond plat et des rebords, est fixée à des supports 204 eux-mêmes fixés au fût 201, via des fixations 205. L'auge 101 est, selon l'un des modes de réalisation, constituée d'éléments en forme de quart de cercle ou de demi-cercle reliés les uns aux autres au niveau des supports 204. Certains de ces éléments d'auge peuvent être équipés de tubes échangeurs (non représentés sur la figure 7 mais visibles sur la figure 4) connectés à des collecteurs, lesquels collecteurs sont mis en communication avec l'extérieur, de préférence au travers de piquages fixés au fût cylindrique 201.

Dans d'autres cas, les éléments d'auge peuvent être munis de grilles pour la diffusion de gaz au travers du lit de solides en mouvement, sans pour autant que l'on atteigne un état de fluidisation complète, ce qui perturberait fortement le régime d'écoulement.

L'apport ou l'extraction de gaz dans le dispositif selon l'invention peut se faire aux moyens de cannes 206 fixées au fût cylindrique par des piquages 207. A partir de ces piquages, on peut ensuite partir en liaison souple vers l'extérieur dudit fût cylindrique 201.

L'isolation de l'auge 101 vis-à-vis de l'extérieur peut être assurée par des tôles 208, en forme de quart de cercle ou de demi-cercle, fixées sur des supports extérieurs 209, eux-mêmes fixés aux supports 204.

L'avantage d'un tel mode de construction est de pouvoir travailler avec des auges à fond plat alors que les systèmes connus utilisent plutôt des tubes de section ronde ou ovale. L'intérêt de l'auge à fond plat est d'avoir une couche de solides plus uniforme, un meilleur contact entre phase gazeuse et phase solide, de pouvoir travailler avec des débits de solides importants, de pouvoir mettre en place des moyens de refroidissement directement dans le lit de solides, de faciliter les opérations d'extrapolation puisque la couche a une épaisseur sensiblement constante en tout point du système. Par ailleurs une auge à fond plat est plus compacte que les systèmes à tubes, à capacité identique.

Le mode de réalisation qui vient d'être décrit offre aussi la possibilité d'avoir un accès facile en tout point du système. Le montage et le démontage sont faciles et l'on peut aisément effectuer des opérations de nettoyage si nécessaire.

La figure 8 concerne un mode de réalisation de l'invention qui diffère de celui de la figure 7 en ce que l'auge 101 est globalement plate. Elle est même préférentiellement inclinée vis-à-vis de l'horizontal.

Le fond de l'auge est constitué de caissons 302 d'alimentation en gaz, le gaz étant introduit par des arrivées 303 placées au-dessous des caissons 302. La surface supérieure 301 des caissons 302, en contact avec le lit de solides 304, est réalisée en un matériau poreux (fritté métallique ou céramique...) ou en tôle perforée pour permettre le passage du gaz tout en supportant le solide et en lui transmettant les vibrations.

Des baffles internes 306 peuvent être ajoutées pour contrôler le flux gazeux au-dessus du lit de solides. Les éléments 306 ont en outre pour fonction d'isoler les différentes zones (de chauffage 101a, de traitement 101b et de refroidissement 101c) les unes des autres.

Par ailleurs, des systèmes d'extraction des gaz sous forme de sorties 307 sont disposées au-dessus du lit de solides.

La figure 9 illustre une architecture proche de celle de la figure 8. La différence réside en ce que les caissons d'alimentation 302 sont remplacés par des tubes perforés 308 disposés au fond de l'auge 101, et qui permettent d'amener facilement le gaz directement dans le lit de solides 304.

A chaque zone 101a, 101b, 101c est associé un ou plusieurs tubes perforés 308 qui amène le fluide approprié (de chauffage, de traitement ou de refroidissement) dans le lit de solides.

Des baffles intérieures supplémentaires 306 peuvent en outre être prévues dans la zone de traitement elle-même 101b.

D'une façon générale, le dispositif selon l'invention peut être employé pour éliminer des revêtements de polymères sur des objets métalliques. Ces revêtements ne représentent souvent que quelques pour-cent en masse des objets et leur élimination dans des conditions thermique modérées, c'est-à-dire à des températures inférieures à 500-600°C, permet de préserver leurs caractéristiques mécaniques et facilite leur recyclage.

Une autre application possible du dispositif selon l'invention concerne des objets recouverts de polymères et/ou mélangés à des polymères ou des produits organiques qui ont déjà subi une première dégradation thermique par pyrolyse. Il subsiste alors des dépôts de coke qu'il faut éliminer, là encore dans des conditions de température modérées, afin de ne pas altérer les matériaux à recycler.

Un exemple précis est celui des câbles électriques, de cuivre ou d'aluminium dont on a éliminé la gaine polymérique par thermolyse. Pour récupérer des matériaux directement valorisables, il faut éliminer les dépôts carbonés tout en évitant l'oxydation des métaux ; la présente invention est tout à fait adaptée à cet effet.

## Revendications

1. Dispositif d'élimination de dépôts carbonés sur des objets solides comprenant une entrée (102) pour les objets à traiter, une zone de chauffage (101a) desdits objets ayant une alimentation (104) et une sortie pour le gaz de chauffage, une zone de traitement (101b) desdits objets par oxydation et/ou gazéification ayant une alimentation (105) et une sortie (108) pour le fluide de gazéification, une sortie (118) pour les objets traités, **caractérisé en ce que** lesdites zones de chauffage (101a) et de traitement (101b) sont situées dans une même enceinte (100) et comprennent un élément vibrant à fond essentiellement plat (101) destiné au transport des objets, ledit fond permettant le support des objets, la diffusion du fluide à travers lesdits objets et la transmission des vibrations et **en ce qu'**il comprend en outre une zone de refroidissement (101c) desdits solides disposée dans ladite enceinte (100) en aval de la zone de traitement (101b) relativement au sens de déplacement desdits solides dans l'enceinte (100) ; et un moyen de chauffage (115, 116) extérieur à l'enceinte (100) étant prévu.

2. Dispositif selon la revendication 1, **caractérisé en ce qu'**il comprend en outre un conduit (111) entre la sortie pour les gaz de chauffage et l'entrée pour les gaz de refroidissement, un compresseur (112) et une vanne étant prévus sur ledit conduit.

3. Dispositif selon l'une quelconque des revendications précédentes, **caractérisé en ce que** le moyen de chauffage comprend un brûleur (116) associé à une chambre de combustion (115), l'entrée du brûleur étant relié à une sortie de la zone de refroidissement (101c) et la sortie de la chambre de combustion (115) à une entrée dans la zone de chauffage (101a).

4. Dispositif selon la revendication 3, **caractérisé en ce qu'**il comprend en outre un conduit de dérivation (114) du moyen de chauffage (115, 116), conduit dans lequel transitent les gaz lorsqu'ils non pas besoin d'être réchauffés.

5. Dispositif selon l'une quelconque des revendications précédentes, **caractérisé en ce que** l'entrée (105) pour le fluide de gazéification comprend un distributeur multipoints (106).

6. Dispositif selon l'une quelconque des revendications précédentes, **caractérisé en ce que** la sortie pour le fluide de gazéification comprend un collecteur multipoints (108).

7. Dispositif selon la revendication 6, **caractérisé en ce que** ledit collecteur (108) comprend une sortie unique reliée à l'entrée d'un échangeur de chaleur (109) ou d'une chaudière.

8. Dispositif selon l'une quelconque des revendications précédentes, **caractérisé en ce qu'**il comprend en outre des moyens (106) d'isolement des atmosphères entre la zone de chauffage (101a) et la zone de traitement (101b) et entre la zone de traitement (101b) et la zone de refroidissement (101c).

9. Dispositif selon l'une quelconque des revendications précédentes, **caractérisé en ce que** ladite zone de traitement (101a) comprend plusieurs éléments de séparation.

10. Dispositif selon l'une quelconque des revendications précédentes, **caractérisé en ce que** l'élément vibrant à fond essentiellement plat (101) est une auge munie de rebords, de forme générale hélicoïdale, fixée sur son diamètre intérieur à un vibrateur tel qu'un fût cylindrique (201).

11. Dispositif selon l'une quelconque des revendications 1 à 9, **caractérisé en ce que** l'élément vibrant à fond plat essentiellement (101) est une plateforme commune aux zones de chauffage, de traitement et de refroidissement.

12. Dispositif selon l'une quelconque des revendications précédentes, **caractérisé en ce que** les différentes alimentations gazeuses sont constituées de tubes perforés (308) disposés sur le fond plat de l'auge (101).

13. Dispositif selon la revendication 11, **caractérisé en ce que** l'élément plat est constitué de caissons d'alimentation (302) en gaz et **en ce que** la surface inférieure de l'auge est constituée d'un matériau poreux ou d'une tôle perforée.

## Patentansprüche

1. Vorrichtung zur Beseitigung kohlenstoffhaltiger Abscheidungen auf festen Gegenständen umfassend: einen Eingang (102) für die zu behandelnden Gegenstände, eine Zone zum Heizen (101a) dieser Gegenstände mit einer Zuführung (104) und einem Ausgang für die Heizgase, einer Zone (101b) zur Behandlung dieser Gegenstände durch Oxidation und/oder Vergasung mit einer Zuführung (105) und einem Austritt (108) für das Vergasungsfluid und einen Ausgang (118) für die behandelten Gegenstände, **dadurch gekennzeichnet, dass** diese Heizzonen (101a) und Behandlungszonen (101b) in ein und dem gleichen Gefäß (100) untergebracht sind und ein vibrierendes Element mit im wesentlichem flachen Boden (101), der zum Transport der Gegenstände bestimmt ist, umfassen, wobei dieser Boden die Abstützung der Gegenstände, die Verteilung des Fluids über diese Gegenstände und die Übertragung der Schwingungen ermöglicht und **dass** es im übrigen eine Kühlzone (101c) für diese Feststoffe, angeordnet in diesem Gefäß (100) hinter der Behandlungszone (101b), bezogen auf die Bewegungsrichtung dieser Feststoffe in diesem Gefäß (100), umfasst; und wobei ein Heizmittel (115, 116) außerhalb des Gefäßes (100) vorgesehen ist.

2. Vorrichtung nach Anspruch 1, **dadurch gekennzeichnet, dass** sie im übrigen eine Leitung (111) zwischen dem Austritt für die Heizgase und dem Eintritt für die Kühlgase umfasst, wobei ein Kompressor (112) und ein Ventil an der Leitung vorgesehen sind.

3. Vorrichtung nach einem der vorhergehenden Ansprüche, **dadurch gekennzeichnet, dass** das Heizmittel einen Brenner (116) zugeordnet zu einer Brennkammer (115) umfasst, wobei der Eintritt des Brenners mit einem Ausgang der Kühlzone (101c) und der Ausgang der Brennkammer (115) mit einem Eintritt in die Heizzone (101a) verbunden ist.

4. Vorrichtung nach Anspruch 3, **dadurch gekennzeichnet, dass** sie im übrigen eine Umführungsleitung (114) des Heizmittels (115, 116) umfasst, wobei in dieser Leitung die Gase strömen, wenn sie nicht erwärmt werden müssen.

5. Vorrichtung nach einem der vorhergehenden Ansprüche, **dadurch gekennzeichnet, dass** der Eintritt (105) für das Vergasungsfluid einen Mehrpunktverteiler (106) umfasst.

6. Vorrichtung nach einem der vorhergehenden Ansprüche, **dadurch gekennzeichnet, dass** der Ausgang für das Vergasungsfluid einen Mehrpunktsammler (108) umfasst.

7. Vorrichtung nach Anspruch 6, **dadurch gekennzeichnet, dass** dieser Sammler (108) einen einzigen Ausgang umfasst, der mit dem Eingang eines Wärmeaustauschers (109) oder eines Kessels verbunden ist.

8. Vorrichtung nach einem der vorhergehenden Ansprüche, **dadurch gekennzeichnet, dass** sie im übrigen Mittel (106) zur Isolierung der Atmosphären zwischen der Heizzone (101a) und der Behandlungszone (101b) und zwischen der Behandlungszone (101b) und der Kühlzone (101c) umfasst.

9. Vorrichtung nach einem der vorhergehenden Ansprüche, **dadurch gekennzeichnet, dass** diese Behandlungszone (101a) mehrere Trennelemente umfasst.

10. Vorrichtung nach einem der vorhergehenden Ansprüche, **dadurch gekennzeichnet, dass** das vibrierende Element mit im wesentlichen flachem Boden (101) ein mit Rändern versehener Trog von im wesentlichen spiralförmiger Gestalt ist, der an seinem Innendurchmesser mit einem Vibrator, beispielsweise einem zylindrischen Schaft (201), befestigt ist.

11. Vorrichtung nach einem der Ansprüche 1 bis 9, **dadurch gekennzeichnet, dass** das vibrierende Element mit flachem Boden (101) im wesentlichen eine Plattform ist, die den Heiz-, Behandlungs- und Kühlzonen gemeinsam ist.

12. Vorrichtung nach einem der vorhergehenden Ansprüche, **dadurch gekennzeichnet, dass** die unterschiedlichen Gaszuführungen gebildet sind durch perforierte Rohre (308), die auf dem flachen Boden des Trogs (101) angeordnet sind.

13. Vorrichtung nach Anspruch 11, **dadurch gekennzeichnet, dass** das flache Element gebildet ist durch Gaszuführungskästen (302) und **dass** die Unterseite des Trogs aus einem porösen Material oder einem perforierten Blech gebildet ist.

## Claims

1. Device for eliminating carbon deposits on solid objects comprising an inlet (102) for the objects to be treated, a heating zone (101a) for said objects having a supply inlet (104) and an outlet for the heating gas, a treatment zone (101b) for said objects by oxidation and/or gasification having a supply inlet (105) and an outlet (108) for the gasification fluid, and an outlet (118) for the treated objects, ***characterised in that*** said heating zone (101a) and treatment zone (101b) are situated in the same enclosure (100) and comprise a vibrating element with an essentially flat bottom (101) designed for conveyance of the objects, said bottom allowing support of the objects, diffusion of the fluid through said objects and transmission of the vibrations, and **in that** it additionally comprises a cooling zone (101c) for said solid objects disposed in said enclosure (100) downstream of the treatment zone (101b) relative to the direction of movement of said solid objects in the enclosure (100), with a heating means (115, 116) being provided outside the enclosure (100).

2. Device according to claim 1, ***characterised in that*** it additionally comprises a passage (111) between the outlet for the heating gases and the inlet for the cooling gases, with a compressor (112) and a valve being provided on said passage.

3. Device according to any one of the preceding claims, ***characterised in that*** the heating means comprises a burner (116) associated with a combustion chamber (115), the inlet of the burner being connected to an outlet of the cooling zone (101c) and the outlet of the combustion chamber (115) to an inlet in the heating zone (101a).

4. Device according to claim 3, ***characterised in that*** it additionally comprises a bypass passage (114) for the heating means (115, 116), through which the gases pass when they do not need to be heated.

5. Device according to any one of the preceding claims, ***characterised in that*** the inlet (105) for the gasification fluid comprises a multipoint distributor (106).

6. Device according to any one of the preceding claims, **characterised in that** the outlet for the gasification fluid comprises a multipoint collector (108).

7. Device according to claim 6, ***characterised in* that** said collector (108) comprises a single outlet connected to the inlet of a heat exchanger (109) or a boiler.

8. Device according to any one of the preceding claims, ***characterised in that*** it additionally comprises means (106) for isolating the atmospheres between the heating zone (101a) and the treatment zone (101b) and between the treatment zone (101b) and the cooling zone (101c).

9. Device according to any one of the preceding claims, ***characterised in that*** said treatment zone (101a) comprises a plurality of separating elements.

10. Device according to any one of the preceding claims, ***characterised in that*** the vibrating element with the essentially flat bottom (101) is a trough provided with edges, of helical general shape, fixed at its inside diameter to a vibrator such as a cylindrical barrel (201).

11. Device according to any one of claims 1 to 9, ***characterised in that*** the vibrating element with the essentially flat bottom (101) is a platform which is common to the heating, treatment and cooling zones.

12. Device according to any one of the preceding claims, ***characterised in that*** the different gas supply inlets are constituted by perforated tubes (308) disposed on the flat bottom of the trough (101).

13. Device according to claim 11, ***characterised in that*** the flat element is constituted by gas supply boxes (302) and **in that** the lower surface of the trough is constituted by a porous material or a perforated sheet.
